# EUROPEAN PATENT APPLICATION

(11) **EP 3 973 825 A1**
(43) Date of publication of application: **30.03.2022**
(21) Application number: 20810815.9
(22) Date of filing: 18.05.2020
(51) Int. Cl.: A47J 31/00, A47J 31/44

(54) **SODA MACHINE HAVING SUB-UNIT LOCKED**

(30) Priority: 20.05.2019 CN 201920726200 U
(71) Applicant: Guan, Jinye, Guangdong 529300 (CN)
(72) Inventor: Guan, Jinye, Guangdong 529300 (CN)
(74) Representative: Sánchez Margareto, Carolina
(86) International application number: PCT/CN2020/090848
(87) International publication number: WO 2020/233546

(57) **Abstract**

A soda machine having a sub-unit locked is provided, comprising a main body (1), a main unit (2), and a sub-unit (3). The main body (1) comprises a housing (4), a base (5), a steel cylinder (6) provided in the housing (4), an air outlet mechanism (72) fitted with the steel cylinder (6), and a pivot cavity (8) provided at one side of the upper part of the housing (4), and further comprises a shifting block holder (22), a shifting block (21), a locking stopper (24), and a pressure spring (25). A pivot head of the shifting block (23) is inserted into a pivot groove (221), and an end part of a substrate part (231) is fitted with the shifting block holder (22) at the upper part and the lower part of the pivot groove (221) for stopping; a locking lever part (242) of the locking stopper (22) penetrates through the pressure spring (25) and a guide hole (104) to extend into a sleeve (101); a cylindrical head (241) is in sliding fit with a guide cylinder (102), the locking lever part (242) is in sliding fit with the guide hole (104), and a transverse rod part (243) is in sliding fit with the guide groove (103) and extends out of the guide groove (103); the transverse rod part (243) is in sliding fit with an inclined pressing plate part (232). In a working state, the inclined pressing plate part (232) presses the transverse rod part (243), and the lower end of the locking lever part (242) extends into a locking groove (151); the main unit (2) and the sub-unit (3) are locked together to prevent an erroneous operation in the working state, and the sub-unit (3) is disassembled to effectively prevent gas leakage. After the work is completed, it is convenient to assemble or disassemble the sub-unit (3).

## Description

### TECHNICAL FIELD

The present Patent relates to a soda machine.

### BACKGROUND ART

At present, in the prior art, a soda machine comprises a main body, a main unit and a sub-unit, wherein the main body comprises a housing, a base, a steel cylinder provided in the housing, an air outlet mechanism fitted with the steel cylinder and a pivot cavity provided at one side of the upper part of the housing. The main unit comprises an upper cover, an air inlet support, a sub-unit support, an air inlet seat provided on the air inlet support and an air outlet nozzle. A pivot seat plate is provided on the upper cover. A half shaft is provided on the pivot seat plate. A locking protrusion is provided in the sleeve of the air inlet support. The sub-unit comprises a sub-unit upper housing, a positioning seat, a sub-unit main body, a sub-unit bottom cover, an exhaust device provided on the sub-unit main body, a conical ring, a water bottle interface and a soda bottle. The positioning seat is provided with a spiral locking groove. The pivot seat plate extends into the pivot cavity. The half shaft is rotatably fitted with the shaft hole. The locking protrusion is fitted with the spiral locking groove. In a working state, the soda bottle is vertical to the horizontal plane. In another state, the main unit and the sub-unit rotate together for a certain angle, and then the sub-unit is disassembled. The existing problem is that in the working state, the main unit can be separated from the sub-unit by rotating the sub-unit. It is inconvenient to operate, and there is a hidden danger of gas leakage during erroneous operation.

### SUMMARY

The purpose of the present Patent is to provide a soda machine having a sub-unit locked, which can prevent the sub-unit from rotating with respect to the main unit in the working state, and prevent the sub-unit from rotating erroneously in the working state. The present Patent is realized as follows: a soda machine having a sub-unit locked, comprising a main body, a main unit, and a sub-unit, wherein the main body comprises a housing, a base, a steel cylinder provided in the housing, an air outlet mechanism fitted with the steel cylinder, and a pivot cavity provided at one side of the upper part of the housing, the main unit comprises an upper cover, an air inlet support, a sub-unit support, an air inlet seat provided on the air inlet support and an air outlet nozzle, a pivot seat plate is provided on the upper cover, a half shaft is provided on the pivot seat plate, a locking protrusion is provided in the sleeve of the air inlet support, the sub-unit comprises a sub-unit upper housing, a positioning seat, a sub-unit main body, a sub-unit bottom cover, an exhaust device provided on the sub-unit main body, a conical ring, a water bottle interface and a soda bottle, the positioning seat is provided with a spiral locking groove, the pivot seat plate extends into the pivot cavity, the half shaft is rotatably fitted with the shaft hole, and the locking protrusion is fitted with the spiral locking groove; wherein a guide cylinder is provided on the air inlet support, a guide groove penetrating through the wall thickness of the guide cylinder is provided on the guide cylinder, and the guide cylinder is communicated with the sleeve through a guide hole provided on the top plate of the sleeve;
the main unit further comprises a shifting block holder, a shifting block, a locking stopper, and a pressure spring;
the shifting block holder is provided with a pivot groove;
the shifting block comprises a pivot head, a substrate part and an inclined pressing plate part;
the locking stopper comprises a cylindrical head, a locking lever part provided at the lower end of the cylindrical head and a transverse rod part radially connected with the cylindrical head;
the pivot head is inserted into the pivot groove, the pivot head is pivoted with the pivot groove through a fixed shaft, an end part of a substrate part is fitted with the shifting block holder at the upper part and the lower part of the pivot groove for stopping; a locking lever part of the locking stopper penetrates through the pressure spring and a guide hole to extend into a sleeve, the cylindrical head is in sliding fit with a guide cylinder, the locking lever part is in sliding fit with the guide hole, a transverse rod part is in sliding fit with the guide groove and extends out of the guide groove; the transverse rod part is in sliding fit with an inclined pressing plate part; in one state, the inclined pressing plate part presses the transverse rod part, and the lower end of the locking lever part extends into a locking groove; in another state, the inclined pressing plate is separated from the transverse rod part, and the lower end of the locking lever is separated from the locking groove.

According to the soda machine having a sub-unit locked, the soda machine further comprises a longitudinal plate and a driven rod provided at the lower part of the longitudinal plate, wherein the longitudinal plate is connected with the transverse rod part;
the inclined pressing plate part is fitted with the driven rod.

The present Patent relates to a soda machine having a sub-unit locked. Since such a structure is used, the main unit and the sub-unit are locked together to prevent an erroneous operation in the working state, and the sub-unit is disassembled to effectively prevent gas leakage. After the work is completed, it is convenient to assemble or disassemble the sub-unit.

### BRIEF DESCRIPTION OF THE DRAWINGS

FIG. 1 is a perspective view of the present Patent.

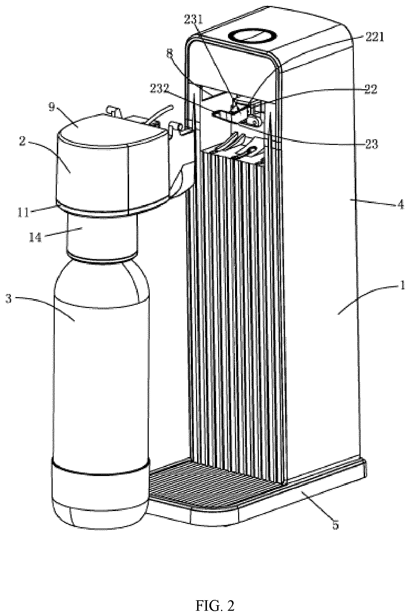

FIG. 2 is a perspective exploded view of the present Patent.

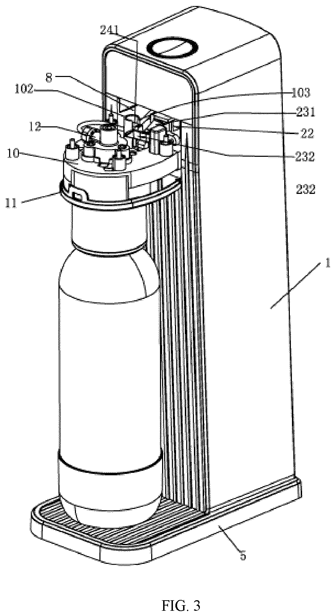

FIG. 3 is a perspective view of the present Patent with the upper cover removed.
FIG. 4 is a sectional view of the present Patent.
FIG. 5 is a view A-A of FIG. 4.

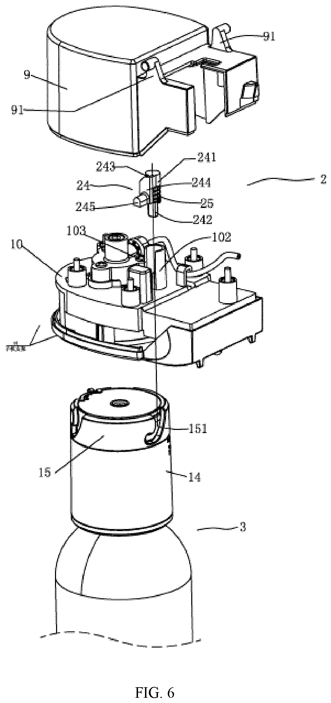

FIG. 6 is a perspective exploded view of a sub-unit according to the present Patent.

### DETAILED DESCRIPTION OF THE EMBODIMENTS

The present Patent will be further described with reference to the attached drawings.

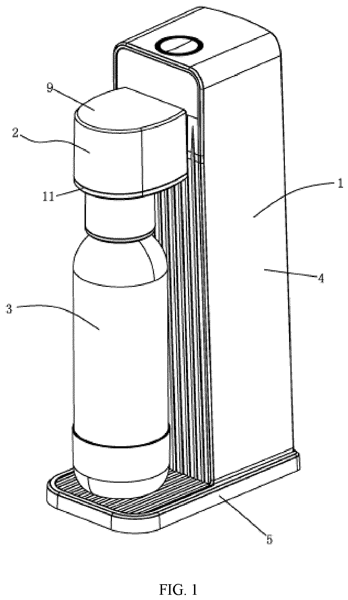

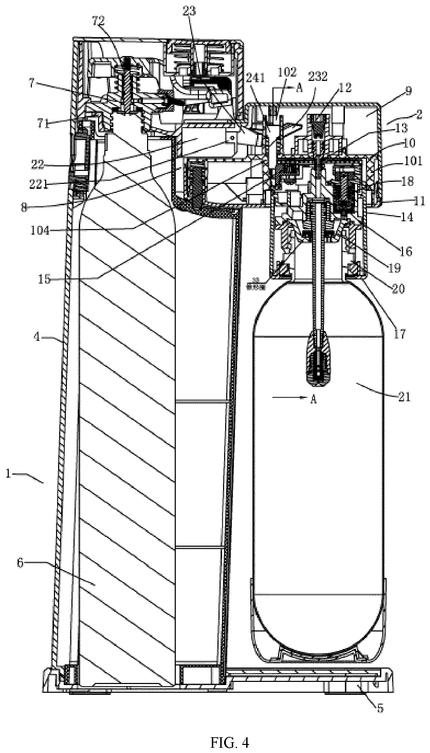

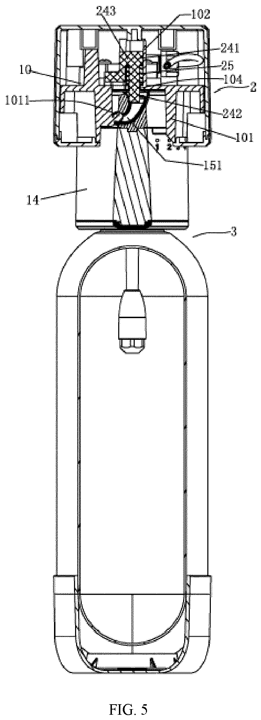

As shown in FIG. 1, a soda machine having a sub-unit locked comprises a main body 1, a main unit 2 and a sub-unit 3, wherein the main body 1 comprises a housing 4, a base 5, a steel cylinder 6 provided in the housing, an air outlet main body 7, an air outlet main body seat 71, an air outlet mechanism 72 provided on the air outlet main body 7 and fitted with the steel cylinder, and a pivot cavity 8 provided at one side of the upper part of the housing. The main unit 2 comprises an upper cover 9, an air inlet support 10, a sub-unit support 11, an air inlet seat 12 provided on the air inlet support and an air outlet nozzle 13. A pivot seat plate 91 is provided on the upper cover 9. A half shaft is provided on the pivot seat plate 91. As shown in FIG. 5, a locking protrusion 1011 is provided in the sleeve 101 of the air inlet support 10. The sub-unit 3 comprises a sub-unit upper housing 14, a positioning seat 15, a sub-unit main body 16, a sub-unit bottom cover 17, an exhaust device 18 provided on the sub-unit main body, a conical ring 19, a water bottle interface 20 and a soda bottle 21. The positioning seat 15 is provided with a spiral locking groove 151. The pivot seat plate 91 extends into the pivot cavity 8. The half shaft is rotatably fitted with the shaft hole. The locking protrusion is fitted with the spiral locking groove 151. In the working state shown in FIG. 1 and FIG. 4, gas from the steel cylinder 6 enters the sub-unit 3 through the air outlet mechanism 72, the air inlet seat 12 and the air outlet nozzle 13.

A guide cylinder 102 is provided on the air inlet support 10, a guide groove 103 penetrating through the wall thickness of the guide cylinder is provided on the guide cylinder 102, and the guide cylinder 102 is communicated with the sleeve 101 through a guide hole 104 provided on the top plate of the sleeve 101.

The main unit further comprises a shifting block holder 22, a shifting block 23, a locking stopper 24, and a pressure spring 25.

The shifting block holder 22 is provided with a pivot groove 221.

The shifting block 23 comprises a pivot head, a substrate part 231 and an inclined pressing plate part 232.

The locking stopper 24 comprises a cylindrical head 241, a locking lever part 242 provided at the lower end of the cylindrical head and a transverse rod part 243 radially connected with the cylindrical head.

The pivot head of the shifting block 23 is inserted into the pivot groove 221. The pivot head is pivoted with the pivot groove through a fixed shaft. An end part of a substrate part 231 is fitted with the shifting block holder 22 at the upper part and the lower part of the pivot groove for stopping. A locking lever part 242 of the locking stopper 24 penetrates through the pressure spring 25 and a guide hole 104 to extend into a sleeve 101. The cylindrical head 241 is in sliding fit with a guide cylinder 102. The locking lever part 242 is in sliding fit with the guide hole 104. A transverse rod part 242 is in sliding fit with the guide groove 103 and extends out of the guide groove 103. The transverse rod part 243 is in sliding fit with an inclined pressing plate part 232.

The locking stopper 24 further comprises a longitudinal plate 244 and a driven rod 245 provided at the lower part of the longitudinal plate, wherein the longitudinal plate 244 is connected with the transverse rod part 243.

The inclined pressing plate part 232 is fitted with the driven rod 245.

FIG. 1, FIG. 4, and FIG. 5 are in the working state. In the working state, the inclined pressing plate part 232 presses the driven rod 245. The end of the substrate part 231 of the shifting block 23 is fitted with the upper part of the shifting block holder 22 for stopping. The lower end of the locking lever 242 extends into the locking groove 151. In the working state, the sub-unit 3 cannot rotate with respect to the main unit 2.

In the state shown in FIG. 4, the main unit 2 and the sub-unit 3 rotate counterclockwise together. When the main unit 2 and the sub-unit 3 rotate, the inclined pressing plate part 232 of the shifting block 23 is in sliding fit with the driven rod 25 until the inclined pressing plate part 232 is separated from the driven rod, and the end of the substrate part 231 of the shifting block 23 is fitted with the lower part of the shifting block holder 22. Under the action of the pressure spring 25, the locking stopper 24 moves upward, and the locking lever part 242 is separated from the locking groove 151. The sub-unit 3 is rotated, and the sub-unit 3 is separated from the main unit 2.

The above is only the preferred embodiment of the present Patent. It should be pointed out that several improvements and modifications can be made without departing from the principle of the present Patent for those skilled in the art, which is also regarded as the scope of protection of the present Patent.

## Claims

1. A soda machine having a sub-unit locked, comprising a main body, a main unit, and a sub-unit, wherein the main body comprises a housing, a base, a steel cylinder provided in the housing, an air outlet mechanism fitted with the steel cylinder, and a pivot cavity provided at one side of the upper part of the housing, the main unit comprises an upper cover, an air inlet support, a sub-unit support, an air inlet seat provided on the air inlet support and an air outlet nozzle, a pivot seat plate is provided on the upper cover, a half shaft is provided on the pivot seat plate, a locking protrusion is provided in the sleeve of the air inlet support, the sub-unit comprises a sub-unit upper housing, a positioning seat, a sub-unit main body, a sub-unit bottom cover, an exhaust device provided on the sub-unit main body, a conical ring, a water bottle interface and a soda bottle, the positioning seat is provided with a spiral locking groove, the pivot seat plate extends into the pivot cavity, the half shaft is rotatably fitted with the shaft hole, and the locking protrusion is fitted with the spiral locking groove; wherein a guide cylinder is provided on the air inlet support, a guide groove penetrating through the wall thickness of the guide cylinder is provided on the guide cylinder, and the guide cylinder is communicated with the sleeve through a guide hole provided on the top plate of the sleeve;
the main unit further comprises a shifting block holder, a shifting block, a locking stopper, and a pressure spring;
the shifting block holder is provided with a pivot groove;
the shifting block comprises a pivot head, a substrate part and an inclined pressing plate part;
the locking stopper comprises a cylindrical head, a locking lever part provided at the lower end of the cylindrical head and a transverse rod part radially connected with the cylindrical head;
the pivot head is inserted into the pivot groove, the pivot head is pivoted with the pivot groove through a fixed shaft, an end part of a substrate part is fitted with the shifting block holder at the upper part and the lower part of the pivot groove for stopping; a locking lever part of the locking stopper penetrates through the pressure spring and a guide hole to extend into a sleeve, the cylindrical head is in sliding fit with a guide cylinder, the locking lever part is in sliding fit with the guide hole, a transverse rod part is in sliding fit with the guide groove and extends out of the guide groove; the transverse rod part is in sliding fit with an inclined pressing plate part; in one state, the inclined pressing plate part presses the transverse rod part, and the lower end of the locking lever part extends into a locking groove; in another state, the inclined pressing plate is separated from the transverse rod part, and the lower end of the locking lever is separated from the locking groove.

2. The soda machine having a sub-unit locked according to claim 1, further comprising a longitudinal plate and a driven rod provided at the lower part of the longitudinal plate, wherein the longitudinal plate is connected with the transverse rod part;
the inclined pressing plate part is fitted with the driven rod.
